# EUROPÄISCHE PATENTSCHRIFT

(11) **EP 1 878 713 B1**
(45) Veröffentlichungstag und Bekanntmachung des Hinweises auf die Patenterteilung: **22.04.2009**
(21) Anmeldenummer: 06014696.6
(22) Anmeldetag: 14.07.2006
(51) Int. Cl.: C04B 40/00

(54) **Stabile Spritzbetonbeschleunigerdispersion mit hohem Aktivstoffgehalt**
Stable shotcrete accelerator dispersion with high content in active matter
Dispersion stable d'accélérateur de prise pour l'application de béton projeté ayant une haute teneur en matière active

(43) Veröffentlichungstag der Anmeldung: 16.01.2008
(73) Patentinhaber: Construction Research and Technology GmbH, 83308 Trostberg (DE)
(72) Erfinder: Weibel, Martin, 8048 Zürich (CH)
(74) Vertreter: Böhm, Thomas

(56) Entgegenhaltungen:
- EP-A1- 0 812 812
- EP-A1- 1 167 317
- EP-B1- 1 114 004
- WO-A-03/106375
- WO-A-20/05028398
- WO-A-20/06010407

## Beschreibung

Die Erfindung betrifft einen Beschleuniger für Spritzbeton oder Spritzmörtel, dessen Verwendung im Nass- und Trockenspritzverfahren in Spritzbeton oder Spritzmörtel und eine durch den Beschleuniger ausgehärtete Beton- oder Mörtelschicht.

Spritzbeton und Spritzmörtel, der auf Substrate, wie Felsoberflächen von Tunneln, aufgebracht wird, muss schnell abbinden und aushärten, damit dessen Haftung und somit die Sicherheit gewährleistet sind. Aus diesem Grund werden dem Spritzbeton oder Spritzmörtel Beschleuniger hinzugegeben, welche eine schnelle Aushärtung gewährleisten.

In der Vergangenheit wurden typischerweise stark alkalische Beschleuniger eingesetzt, wobei sich heute, insbesondere auf Grund der sichereren Handhabbarkeit sowie einer resultierenden besseren Beton- bzw. Mörtelqualität, alkalifreie Beschleuniger allgemein durchgesetzt haben. Die alkalifreien Beschleuniger können sowohl in Form einer Dispersion als auch einer Lösung vorliegen. Wesentlich ist, dass die besagten Dispersionen oder Lösungen einerseits einen hohen Aktivstoffgehalt aufweisen und andererseits hinreichend stabil sind - d.h. dass dispergierte oder gelöste Aktivsubstanz nicht sedimentiert und dass gelöste Beschleunigerkomponenten nicht ausfallen, kristallisieren oder gelieren.

Insbesondere offenbart die EP 1 114 004 B1 Beschleunigerlösungen mit einem hohen Aktivstoffgehalt, die Aluminiumsulfat, Aluminiumhydroxid und Carbonsäuren einsetzen.

Die WO 2006/010407 offenbart sowohl Beschleunigerlösungen als auch Beschleunigerdispersionen mit einem hohen Aktivstoffgehalt, die Aluminiumsulfat und Carbonsäuren sowie gegebenenfalls weitere Aluminiumverbindungen einsetzen.

Die Carbonsäuren werden eingesetzt, um die Stabilität der Beschleuniger zu gewährleisten.

Die EP 0 812 812 B1 offenbart alkalifreie Beschleunigerdispersionen mit einem hohen Aktivstoffgehalt, die Aluminiumsulfat und mindestens ein Alkanolamin in Abwesenheit von Aluminiumhydroxid einsetzen. Diese Dispersionen können einen anorganischen Stabilisator enthalten, der ein Magnesiumsilikat umfasst.

Aluminiumhydroxid wird in den herkömmlichen Beschleunigern in relativ großen Mengen von mehr als 10 Gewichtsprozent eingesetzt. Dies hat den Nachteil hoher Kosten für solche Beschleuniger, da Aluminiumhydroxid von den anorganischen Bestandteilen in der Regel der teuerste Inhaltsstoff ist.

Große Mengen an Säuren und Alkanolaminen haben den Nachteil, dass aufgrund ihrer Auswaschbarkeit die Umwelt, insbesondere Gewässer, belastet werden können. Hohe Gehalte an Carbonsäuren sind auch wegen ihrer Kosten nachteilig.

Ferner hat sich nun in der Praxis gezeigt, dass bei der Anwendung einer im Handel erhältlichen Beschleunigerdispersion mit hohem Aktivstoffgehalt, die Aluminiumsulfat und Diethanolamin einsetzt, in dem erhaltenen Spritzbeton zwar brauchbare Festigkeiten nach einigen Stunden und vor allem nach mehreren Tagen (Endfestigkeiten) erreicht werden, das Abbindeverhalten und die Frühfestigkeit im Zeitraum bis zu einer Stunde jedoch noch verbessert werden können.

Im Gegensatz dazu kann mit einer im Handel erhältlichen Beschleunigerlösung mit hohem Aktivstoffgehalt, die Aluminiumsulfat, Aluminiumhydroxid und eine Carbonsäure einsetzt, bei der Anwendung in Spritzbeton zwar ein rasches Abbindeverhalten und eine gute Frühfestigkeit erzielt werden, die Festigkeit nach wenigen Stunden und nach Tagen kann jedoch noch verbessert werden.

Aufgabe der vorliegenden Erfindung ist es daher einen Beschleuniger bereit zu stellen, der die Nachteile aus dem Stand der Technik beseitigt und insbesondere gegenüber den bekannten Beschleunigern sowohl ein rasches Abbindeverhalten und eine sehr gute Frühfestigkeit, vorzugsweise eine Druckfestigkeit von Spritzbeton von mehr als 0,3 MPa nach 15 min und/oder mehr als 0,60 MPa nach 1 h, als auch eine sehr gute Festigkeit nach einigen Stunden, vorzugsweise eine Druckfestigkeit von Spritzbeton und Spritzmörtel von mehr als 2 MPa nach 6 h und/oder mehr als 15 MPa nach 24 h, und vor allem nach mehreren Tagen, vorzugsweise eine Druckfestigkeit von Spritzbeton und Spritzmörtel von mehr als 40 MPa nach 7 Tagen und/oder mehr als 50 MPa nach 28 Tagen, zeigt und dazu noch eine hinreichende Stabilität, vorzugsweise von mehr als 3 Monaten, aufweist.

Ein rasches Abbinden und eine sehr gute Frühfestigkeit sind insbesondere bei lockerem Gestein und Wassereinbrüchen sowie überall dort, wo ein rascher Baufortschritt finanzielle und logistische Vorteile bringt, von großer Bedeutung. Denn sie bieten früher genügend Schutz, z.B. vor herabstürzenden Steinen, und erlauben so rascher, die nächste Bauetappe, z.B. Bohren der Löcher für eine nächste Sprengung, in Angriff zu nehmen.

Die Lösung dieser Aufgabe ist ein Beschleuniger für Spritzbeton oder Spritzmörtel nach Anspruch 1, der als wässrige Dispersion vorliegt, die 25 bis 40 Gew.-% Aluminiumsulfat und mindestens eine weitere Aluminiumverbindung enthält, so dass das molare Verhältnis von Aluminium zu Sulfat in der Dispersion 1,35 bis 0,70 beträgt, wobei die wässrige Dispersion einen anorganischen Stabilisator aufweist, der ein Magnesiumsilikat umfasst.

Weitere bevorzugte Ausführungsformen der Erfindung sind in den weiteren Ansprüchen definiert.

Die in dem Beschleuniger enthaltenen 25 bis 40 Gew.-% Aluminiumsulfat liegen teils dispergiert und teils gelöst vor. Häufig reagiert zumindest eine Teilmenge des Aluminiumsulfats mit anderen Komponenten der Dispersion (z. B. mit Aluminiumhydroxid) unter Ausbildung von komplizierten Aluminiumkomplexen. Somit liegt in der Regel zumindest eine Teilmenge des gelösten Aluminiumsulfats in Form dieser komplexen Strukturen vor. Die Basis für die Angabe des Aluminiumsulfatgehalts (Gew.-% Aluminiumsulfat) ist der Gesamtanteil des Sulfats (wenn 3 mol Sulfat enthalten sind, liegt 1 mol Aluminiumsulfat vor) in der Dispersion. Die Angabe 25 bis 40 Gew.-% Aluminiumsulfat bezieht sich auf wasserfreies Aluminiumsulfat. In der Praxis wird jedoch in der Regel Wasser-enthaltendes Aluminiumsulfat, z. B. mit einem Aluminiumgehalt gemäß "17% Al₂O₃" eingesetzt. Die Zugabe der mindestens einen weiteren Aluminiumverbindung erhöht den Aluminiumanteil in der Dispersion gegenüber dem Sulfatanteil, so dass das molare Verhältnis von Aluminium zu Sulfat in der Dispersion entsprechend größer als bei Aluminiumsulfat (2:3) ist. Neben dem Aluminiumsulfat können auch noch weitere Sulfat-enthaltende Verbindungen in der Dispersion vorliegen, wobei jedoch stets das Gesamtmolverhältnis von Aluminium zu Sulfat in der Dispersion zwischen 1,35 und 0,70 beträgt.

Als anorganischer Stabilisator, der ein Magnesiumsilikat umfasst, kommen Komponenten in Frage, welche die Sedimentation der dispergierten Teilchen des erfindungsgemäßen Beschleunigers hemmen oder verhindern. In einer besonders bevorzugten Ausführungsform der Erfindung weist die wässrige Dispersion einen anorganischen Stabilisator auf, der Sepiolith umfasst oder ist. Besonders bevorzugt enthält die erfindungsgemäße Dispersion den anorganischen Stabilisator in einem Anteil von 0,1 bis 10 Gew.-%. Noch bevorzugtere Stabilisatorgehalte liegen im Bereich von 0,2 bis 3 Gew.-% und vor allem im Bereich von 0,3 bis 1,3 Gew.-%.

Sepiolith ist ein hydratisiertes Magnesiumsilikat, welches in der Literatur häufig mit der Summenformel

Si₁₂Mg₈O₃₀(OH)₄(OH₂)₈ · 8H₂O

bzw. mit

Mg₄Si₆O₁₅(OH)₂·6H₂O

angegeben wird und, wie die übrigen Tonerden, der Gruppe der Phyllosilikate angehört. Der Sepiolith setzt sich zusammen aus 2 Schichten tetraedrischer Kieselerde, die über Sauerstoffatome mit einer oktaedrischen, unzusammenhängenden Mittelschicht aus Magnesiumatomen verbunden sind. Dieser Aufbau verleiht den Sepiolith-Partikeln eine mikrofaserartige Morphologie.

Im Handel sind mehrere für die vorliegende Erfindung geeignete Produkte von anorganischen Stabilisatoren erhältlich, die Sepiolith umfassen - z. B. "Pangel" der Firma Tolsa.

Pangel ist ein rheologisches Additiv, das aus Sepiolith durch Auflockerung der Faserbündel und Herauslösen der Partikel gewonnen wird, ohne deren besondere, längliche Form zu zerstören.

Definitionsgemäß sollen unter den für die Erfindung geeigneten anorganischen Stabilisatoren insbesondere Produkte verstanden werden, die durch Modifizierungsmaßnahmen unmittelbar aus dem besonders bevorzugten Sepiolith als solchem gewonnen werden, wie z. B. besagtes "Pangel", wobei die Modifizierungsmaßnahmen zumindest weitgehend die längliche Form der Sepiolithpartikel erhalten. Die in diesem Zusammenhang gemeinten Modifizierungsmaßnahmen betreffen bevorzugt die Auflockerung von Sepiolith als solchem sowie Maßnahmen zur Herauslösung von Sepiolith-Partikeln. Ein Beispiel für eine solche Modifizierungsmaßnahme ist das Nassmahlen von Sepiolith als solchem.

Neben dem anorganischen Stabilisator, der ein Magnesiumsilikat umfasst, kann auch ein weiterer anorganischer Stabilisator in dem erfindungsgemäßen Beschleuniger enthalten sein. In Frage kommen gewisse Tonminerale, z.B. Bentonite, gewisse Kaoline und ganz allgemein inerte thixotropierende Substanzen. Ein Beispiel dafür ist das auf Bentonit basierende Tixoton® der Firma Süd-Chemie. Dieser weitere anorganische Stabilisator kann in einer Menge von 0,1 bis 15 Gew.-%, bevorzugt 0,2 bis 5 Gew.-%, noch bevorzugter 0,3 bis 2,5 Gew.-% in dem erfindungsgemäßen Beschleuniger vorliegen.

Der erfindungsgemäße Beschleuniger sorgt für eine vorzügliche Festigkeitsentwicklung - insbesondere eine sehr gute Frühfestigkeit (Festigkeit nach 0 bis 1 Stunde) sowie eine sehr gute Festigkeit nach einigen Stunden (Festigkeit von 6 bis 24 Stunden) und Endfestigkeit (Festigkeit ab 7 Tagen). Der zugesetzte anorganische Stabilisator, insbesondere Sepiolith, ist in der Lage, über viele Monate den hohen Anteil des dispergierten Aluminiumsulfats vor Sedimentation und Verfestigung zu bewahren. Eine irreversible Kristallisation, wie sie bei Beschleunigerlösungen auftreten kann, ist ausgeschlossen. Der erfindungsgemäße Beschleuniger ist somit nicht nur hochwirksam sondern auch besonders lagerstabil.

Der Spritzbetonbeschleuniger enthält normalerweise ungefähr 1 bis 13 Gew.-%, bevorzugt weniger als 10 Gew.-%, besonders bevorzugt 2 bis 8 Gew.-% der mindestens einen weiteren Aluminiumverbindung, noch bevorzugter weniger als 7 Gew.-%, am meisten bevorzugt 2 bis 6 Gew.-% und dabei vorteilhaft weniger als 5 Gew.-% (gewisse Schwankungen sind je nach Qualität der Aluminiumverbindung möglich).

In einer besonders vorteilhaften Ausführungsform der Erfindung ist die mindestens eine weitere Aluminiumverbindung zumindest bei einem pH von 1 bis 5, bevorzugt von 2 bis 3,5, wasserlöslich. Sie liegt vorzugsweise als Aluminiumhydroxid, besonders bevorzugt als amorphes Aluminiumhydroxid, vor. In der Praxis wird häufig an Stelle von reinem (trockenem) amorphem Aluminiumhydroxid technisches Aluminiumhydroxid eingesetzt, welches neben ca. 80 Gew.% reinem amorphen Aluminiumhydroxid noch insbesondere Sulfate, Carbonate und v. a. Wasser enthalten kann.

Da die erfindungsgemäßen Beschleuniger weder bei der Herstellung, noch bei der Lagerung einen pH außerhalb von 1 bis 5 erreichen, bleibt eventuell im Stabilisator enthaltenes Aluminium chemisch gebunden und wird bei den Mengenangaben von Aluminium in dieser Patentanmeldung nicht berücksichtigt. Es beeinflusst die Beschleunigerwirkung auch später im Beton oder Mörtel nicht oder nicht wesentlich. Der dort herrschende hohe pH von typischerweise 12 bis 13 führt insbesondere in den entscheidenden ersten Stunden und Tagen zu keiner oder keiner wesentlichen Aluminiumfreisetzung aus dem Stabilisator.

Bei einer bevorzugten Ausführungsform enthält der Beschleuniger 28 bis 39 Gew.-%, besonders bevorzugt mehr als 32 Gew.-% und bis zu 37 Gew.-% Aluminiumsulfat. Es ergibt sich ein bevorzugtes molares Verhältnis von Aluminium zu Sulfat von 1,05 bis 0,70, besonders bevorzugt 0,94 bis 0,74.

Diese Verhältnisse sind besonders bevorzugt, da der erfindungsgemäße Beschleuniger zu sehr guten Abbindezeiten und Festigkeiten führt, aber deutlich kostengünstiger ist als die herkömmlichen Beschleuniger, die das teure Aluminiumhydroxid in großen Anteilen von mehr als 10 Gew.-% einsetzen.

Der Beschleuniger kann besonders vorteilhaft einen Gehalt von 0,2 bis 3 Gew.-% von dem anorganischem Stabilisator, der ein Magnesiumsilikat umfasst, vorzusgsweise Sepiolith, aufweisen, wobei sich ein Anteil von 0,3 bis 1,3 Gew.-% besonders bewährt hat, da bei Einhaltung dieses Bereichs neben einer wirksamen Stabilisierung der Dispersion eine vorteilhafte Viskosität des Spritzbetonbeschleunigers resultiert. In einem weiten Bereich der hier angegebenen Aluminium- und Sulfatmengen liegt die Viskosität unter 2000 mPa· s bei 20 °C, vielfach im besonders günstigen Bereich unter 1000 mPa· s bei 20 °C.

Besonders bevorzugt liegt die wässrige Dispersion als wässrige Suspension vor.

Der erfindungsgemäße Spritzbetonbeschleuniger kann auch weitere Zusatzstoffe, wie ein oder mehrere Alkanolamin(e), z. B. Triethanolamin und/oder Diethanolamin, sowie eine oder mehrere Carbonsäure(n), wie Dicarbonsäure(n) (z. B. Oxalsäure) und/oder Monocarbonsäure(n) (z. B. Ameisensäure) enthalten. Dadurch können sowohl die Lagerstabilität, die Viskosität, als auch die Beschleunigerwirkung verbessert werden.

Durch den Einsatz von Alkanolamin, vorzugsweise Diethanolamin, neben Aluminiumsulfat und Aluminiumhydroxid und gegebenenfalls einem weiteren anorganischen Stabilisator kann eine besonders gute Beschleunigung erreicht werden, die sich in einem raschen Abbinden und einer guten Festigkeit zeigt.

Bei einer weiteren vorteilhaften Ausführungsform der Erfindung enthält der Beschleuniger nur einen geringen Anteil an Carbonsäure, vorzugsweise weniger als 1 Gew.-% Carbonsäure, noch bevorzugter gar keine Carbonsäure. Dies hat den Vorteil, dass ein besonders ökonomisches Produkt bereitgestellt werden kann, da eine Carbonsäure die Rohmaterialkosten erhöht, für eine hinreichende Stabilität und Beschleunigung in einem erfindungsgemäßen Beschleuniger jedoch nicht benötigt wird. Ferner wird durch den geringeren Anteil an Carbonsäure bzw. durch den Verzicht darauf, die Umweltbelastung durch ausgewaschene Säure verringert.

Vorteilhafte Ausführungsformen des Beschleunigers der Erfindung enthalten 2 bis 6 Gew.-% Alkanolamin, vorzugsweise Diethanolamin. Besonders bevorzugt enthalten solche Beschleuniger 2 bis 6 Gew.-% Aluminiumhydroxid, wobei am meisten bevorzugt ist, dass der Gesamtanteil von Alkanolamin und Aluminiumhydroxid weniger als 10 Gew.-% beträgt. Damit kann ein ökonomischer und besserer Beschleuniger bereitgestellt werden, der den teuren anorganischen Inhaltsstoff Aluminiumhydroxid in einem nur geringen Anteil enthält und somit Kosten spart, während in einem Mörtel oder Beton hervorragende Festigkeiten bei verbessertem Abbinden erreicht werden.

Bei einer weiteren vorteilhaften Ausführungsform der Erfindung enthält der Beschleuniger nur einen geringen Anteil an Alkanolamin, z.B. weniger als 4 Gew.-%, vorzugsweise weniger als 2 Gew.-% Alkanolamin, noch bevorzugter gar kein Alkanolamin. Dies hat den Vorteil, dass ein besonders umweltschonendes Produkt bereitgestellt werden kann, da Alkanolamine, vor allem Diethanolamin, Wasserorganismen schädigen können, für eine hinreichende Stabilität und Beschleunigung in einem erfindungsgemäßen Beschleuniger jedoch nicht benötigt werden.

Die Erfindung betrifft weiterhin die Verwendung des vorstehend beschriebenen Beschleunigers bei der Beschichtung von Substraten, insbesondere Tunneloberflächen, Minenoberflächen, Baugruben, Schächten usw. mit Beton oder Mörtel.

Typischerweise werden in der Praxis pro 100 kg Zement 5 bis 10 kg des erfindungsgemäßen Beschleunigers eingesetzt.

Weiterhin betrifft die Erfindung eine ausgehärtete Schicht aus Beton oder Mörtel, welche durch Auftragung von Spritzbeton oder Spritzmörtel erzeugt wurde, dessen Aushärtung mit einem vorstehend beschriebenen Beschleuniger forciert wurde.

Im Folgenden soll die vorliegende Erfindung anhand von Ausführungsbeispielen näher erläutert werden:
Herstellung der erfindungsgemäßen Beschleuniger A und B:
Es wird Wasser vorgelegt und nachfolgend nacheinander unter Rühren Pangel S9, Aluminiumsulfat, Diethanolamin und Aluminiumhydroxid gemäß der nachstehenden Tabelle hinzugegeben. Anschließend wird für acht Stunden gerührt und über Nacht stehen gelassen. Am nächsten Morgen und am folgenden Abend wird jeweils aufgerührt. Es wird wiederum über Nacht stehen gelassen und am folgenden Morgen erneut aufgerührt, wobei eine homogene Dispersion erhalten wird, die für mindestens drei Monate stabil ist. Das vorstehende Verfahren wird bei Raumtemperatur durchgeführt.

| Ausgangskomponenten (Angaben in kg) | Beschleuniger A | Beschleuniger B |
|---|---|---|
| Wasser | 58,5 | 58,9 |
| Pangel S9 | 0,7 | 0,7 |
| Aluminiumsulfat | 34,8 | 36,4 |
| Diethanolamin | 2 | 2 |
| Aluminiumhydroxid | 4 | 2 |

Vorstehende Mengenangaben betreffen die Massenanteile der Komponenten, wobei angenommen wird, dass die Komponenten in reiner Form vorliegen. In der Realität werden jedoch keine reinen, sondern technische Komponenten eingesetzt, welche insbesondere noch Wasser enthalten. Daraus folgt, dass von den technischen Komponenten entsprechend mehr (als in vorstehender Tabelle angegeben) eingesetzt werden. Zu den eingesetzten technischen Komponenten:
- Wasser
- Pangel S9
- Aluminiumsulfat: Wasser enthaltend/ 17 % Al₂O₃ ; gekörnt und gemahlen
- Diethanolamin: 90 %
- Aluminiumhydroxid: Gehalt 76,8 Gew.% reines Alumiumhydroxid, bis ca. 4 Gew.% Carbonate, Rest im Wesentlichen Wasser

Zum Vergleich werden zwei im Handel erhältliche Beschleuniger C und D getestet.

Der Beschleuniger C ist eine Beschleunigerdispersion mit hohem Aktivstoffgehalt, die Aluminiumsulfat und Diethanolamin einsetzt.

Der Beschleuniger D ist eine Beschleunigerlösung mit hohem Aktivstoffgehalt, die Aluminiumsulfat und eine große Menge von mehr als 10 Gewichtsprozent Aluminiumhydroxid und eine Carbonsäure einsetzt.

### Festigkeitsprüfungen:

Mengenverhältnis Beschleuniger/ Zement: 7 % (7 kg auf 100 kg Zement)

### Eingesetzter Zement: US Typ I Lafarge Alpena (USA)

### Beton

| Zement | US Typ I Lafarge Alpena | |
|---|---|---|
| Wasser/Zement-Verhältnis | | 0,44 |
| Sand Typ A | 0-4mm | 70% [%] |
| Sand Typ B | 4-8mm | 30% [%] |
| Verflüssiger | Glenium® 3030NS (USA) | 0,85 [%] |
| Verzögerer | Delvo®Crete Stabilizer (USA) | 0,95 [%] |

Die Prozentangaben bei dem Verflüssiger und Verzögerer sind auf das Zementgewicht bezogen.

Festigkeitsmessmethode: EFNARC Europäische Richtlinie für Spritzbeton 1999

### Festigkeitswerte:

| **Dosierung** | | | | | | |
|---|---|---|---|---|---|---|
| Beschleuniger A | | | 7% | | | |
| Beschleuniger B | | | | 7% | | |
| Beschleuniger C | | | | | 7% | |
| Beschleuniger D | | | | | | 7% |
| | | | | | | |

| **Druckfestigkeit** | | | | | | |
|---|---|---|---|---|---|---|
| 6 min | Meyco® Needle | [N/mm²] | 0,23 | 0,20 | 0,15 | 0,44 |
| 15 min | Meyco® Needle | [N/mm²] | 0,34 | 0,39 | 0,23 | 0,57 |
| 30 min | Meyco® Needle | [N/mm²] | 0,45 | 0,48 | 0,32 | 0,66 |
| 1 h | Meyco® Needle | [N/mm²] | 0,65 | 0,64 | 0,60 | 0,86 |
| 6 h | Hilti® Nail Gun | [N/mm²] | 4,83 | 2,82 | 3,59 | 1,51 |
| 24 h | Hilti® Nail Gun | [N/mm²] | 18,63 | 17,06 | 20,93 | 6,46 |
| 7 Tage | Bohrkern | [N/mm²] | 44,5 | 50,6 | 48,8 | 26,8 |
| 28 Tage | Bohrkern | [N/mm²] | 57,4 | 54,0 | 54,1 | 38,2 |

### Bewertung der Festigkeitswerte

Die erfindungsgemäßen Beschleuniger A und B binden deutlich schneller ab als der Beschleuniger C, wie die höheren Frühfestigkeiten zeigen. Trotzdem zeigen sie nachher keinerlei Festigkeitseinbuße, wie dies sonst üblich ist. Sowohl nach einigen Stunden wie nach 28 Tagen erreichen sie die gleich guten Werte wie der Beschleuniger C. Ein noch besseres Abbinden und eine noch bessere Entwicklung der Frühfestigkeit ist zwar möglich, wie der Beschleuniger D zeigt, doch wird nach wenigen Stunden keine so gute Festigkeit und insbesondere keine hohe Endfestigkeit erreicht.

Die erfindungsgemäßen Beschleuniger A und B zeigen also überraschenderweise, dass sowohl ein schnelles Abbinden und eine sehr gute Festigkeit über den ganzen Zeitbereich möglich ist. Außerdem weisen die Beschleuniger A und B ohne die Verwendung einer Carbonsäure eine hervorragende Stabilität von mehr als drei Monaten auf.

Die folgenden Beschleuniger E bis H werden wie folgt hergestellt:
Die in der folgenden Tabelle genannten Inhaltsstoffe werden nacheinander zueinander gegeben und bei 65°C 1 Stunde heftig gerührt. Dann lässt man auf Raumtemperatur abkühlen und rührt nach 1 Woche nochmals heftig auf.

| Hergestellte Menge: | | 1 kg | 1 kg | 1 kg | 1 kg |
|---|---|---|---|---|---|
| Zusammensetzung: | | % | % | % | % |
| | | | | | |
| Beschleuniger | | E | F | G | H . |
| Inhaltsstoff | Gehalt | | | | |
| Wasser | | 28,3 | 28,3 | 21,3 | 24,3 |
| Pangel S9 | | 0,7 | 0,7 | 0,7 | 0,7 |
| Diethanolamin | 90% | 2 | 4 | 8 | |
| Aluminiumsulfat 16 Hydrat | 96.4% | 65 | 65 | 70 | 69 |
| Aluminiumhydroxid | 76.8% | 4 | 2 | | 6 |
| Wasser | 100% | 60,4 | 60,2 | 55,5 | 58,6 |
| Pangel S9 | 100% | 0,7 | 0,7 | 0,7 | 0,7 |
| Diethanolamin | 100% | 1,8 | 3,6 | 7,2 | |
| Aluminiumsulfat | 100% | 34,0 | 34,0 | 36,6 | 36,1 |
| Aluminiumhydroxid | 100% | 3,1 | 1,5 | | 4,6 |
| | | | | | |
| AI / Sulfat | mol / mol | 0,80 | 0,73 | 0,67 | 0,85 |

Die Beschleuniger E bis H wurden hinsichtlich der Abbindezeit und der Druckfestigkeit mit Mörtel gemäß der DIN EN 196-1 und -3 getestet:

### Mörtel

| | |
|---|---|
| Zement: | 450 g CEM I 42,5 Normo 4 Untervaz |
| Verflüssiger. | 0,15 % (bez. Zementgewicht) Glenium® 51 |
| Verzögerer: | 0,2 % (bez. Zementgewicht) Delvo®Crete Stabilisator 10 |
| Wasserzementwert (W/Z): | 0,45 |
| Sand: | 1350 g CEN Normsand |

Die Zugabe des Beschleunigers erfolgte in einem Anteil von 9 Gewichtsprozent bezogen auf das Zementgewicht.

Die Ergebnisse der Tests sind wie folgt:

| Beschleuniger | | E | F | G | H |
|---|---|---|---|---|---|
| Abbindeanfang | (Minuten) | 2,5 | 3,5 | 5,0 | 4,0 |
| Abbindeende | (Minuten) | 12 | 12 | 20 | 14 |
| Druckfestigkeit nach 6 Stunden | (MPa) | 2,3 | 2,4 | 3,6 | 3,1 |
| Druckfestigkeit nach 1 Tag | (MPa) | 24,3 | 25,6 | 29,0 | 27,5 |
| Druckfestigkeit nach 7 Tagen | (MPa) | 40,7 | 41,7 | 48,0 | 47,2 |

Wie aus den obigen Ergebnissen ersichtlich ist, können mit den erfindungsgemäßen Beschleunigern E, F und H, insbesondere H, sehr gute Festigkeitswerte erreicht werden, die nahezu genauso gut sind wie in dem Referenzbeschleuniger G, der neben Aluminiumsulfat keine weitere Aluminiumverbindung einsetzt, die Abbindeeigenschaften sind gegenüber diesem Referenzbeschleuniger G jedoch deutlich verbessert, vor allem bei den Beschleunigern E und F. Diese Verbesserung kann mit nur geringen Mengen an zusätzlichem Aluminiumhydroxid erreicht werden. Dies ist gegenüber den herkömmlichen Beschleunigern, die sehr viel Aluminiumhydroxid in einer Menge von mehr als 10 Gewichtsprozent einsetzen, überraschend und hat den Vorteil, dass ein sehr ökonomischer Beschleuniger bereitgestellt werden kann, der weder teure Carbonsäuren benötigt und das von den anorganischen Inhaltsstoffen teure Aluminiumhydroxid nur in deutlich geringeren Mengen benötigt. Die etwas geringeren Festigkeiten, die mit den Beschleunigern E und F erzielt werden, sind auf die höheren Wassergehalte zurückzuführen.

Analog zu den Beispielen E bis H werden die folgenden Beschleuniger I bis O hergestellt:

| Hergestellte Menge: | | 1 kg | 1 kg | 1 kg | 1 kg | 1 kg | 1 kg |
|---|---|---|---|---|---|---|---|
| Zusammensetzung: | | % | % | % | % | % | % |
| | | | | | | | |
| Beschleuniger | | I | K | L | M | N | O |
| Inhaltsstoff | Gehalt | | | | | | |
| Wasser | | 29,3 | 28,3 | 27,3 | 25,3 | 23,3 | 23,3 |
| Pangel S9 | | 0,7 | 0,7 | 0,7 | 0,7 | 0,7 | 0,7 |
| Aluminiumsulfat 16 Hydrat | 96.4% | 70 | 70 | 70 | 70 | 70 | 68 |
| Aluminiumhydroxid | 76.8% | | 1 | 2 | 4 | 6 | 8 |
| | | | | | | | |
| Wasser | 100% | 62,7 | 61,9 | 61,2 | 59,6 | 58,1 | 57,6 |
| Pangel S9 | 100% | 0,7 | 0,7 | 0,7 | 0,7 | 0,7 | 0,7 |
| Aluminiumsulfat | 100% | 36,6 | 36,6 | 36,6 | 36,6 | 36,6 | 35,6 |
| Aluminiumhydroxid | 100% | | 0,8 | 1,5 | 3,1 | 4,6 | 6,1 |
| | | | | | | | |
| Al / Sulfat | mol / mol | 0,67 | 0,70 | 0,73 | 0,79 | 0,85 | 0,92 |

Die Viskositäten wurden mit einem Brookfield DV - II + Viscometer mit Spindel 4 und 100 Umdrehungen pro Minute bei 20 °C gemessen:

### Viskositäten

| | | | | | | | |
|---|---|---|---|---|---|---|---|
| Durchschnitt | [mPa· s] | 1028 | 1329 | 1031 | 964 | 1036 | 840 |
| Unterer Bereich | [mPa·s] | 796 | 1047 | 848 | 828 | 812 | 660 |
| Oberer Bereich | [mPa·s] | 1260 | 1610 | 1214 | 1100 | 1260 | 1020 |

Die Viskositätswerte zeigen ganz unerwartet, dass bei hohem Aluminiumsulfatgehalt die Viskosität gleich bleibt, wenn ein Teil des Wassers durch Aluminiumhydroxid im Bereich von 2 bis 6 Gewichtsprozent ersetzt wird. Dies führt im Viskositätsbereich, der für praktische Anwendungen notwendig ist, nämlich weniger als 2000 mPa s, vorzugsweise weniger als 1000 mPa·s, zu weiter verbesserten Beschleunigungen im Mörtel, was sich durch schnelleres Abbinden und höhere Druckfestigkeit zeigt.

Die Beschleuniger I, L und M wurden hinsichtlich der Abbindezeit und der Druckfestigkeit mit Mörtel gemäß der DIN EN 196-1 und -3 getestet:

### Mörtel

| | |
|---|---|
| Zement: | 450 g CEM I 42,5 Normo 4 Untervaz |
| Verflüssiger: | 0,15 % (bez. Zementgewicht) Glenium® 51 |
| Verzögerer: | 0,2 % (bez. Zementgewicht) Delvo®Crete Stabilisator 10 |
| Wasserzementwert (W/Z): | 0,45 |
| Sand: | 1350 g CEN Normsand |

Die Zugabe des Beschleunigers erfolgte in einem Anteil von 9 Gewichtsprozent bezogen auf das Zementgewicht.

Die Ergebnisse der Tests sind wie folgt:

| Beschleuniger | I | L | M |
|---|---|---|---|
| Abbindeanfang (Minuten) | 6,0 | 5,5 | 4,5 |
| Abbindeende (Minuten) | 25 | 18 | 12 |
| Druckfestigkeit nach 6 Stunden (MPa) | 2,6 | 2,8 | 3,2 |
| Druckfestigkeit nach 1 Tag (MPa) | 28,6 | 26,4 | 26,0 |
| Druckfestigkeit nach 7 Tagen (MPa) | 51,1 | 48,7 | 50,1 |

Wie aus den obigen Ergebnissen ersichtlich ist, können mit den erfindungsgemäßen Beschleunigern L und M sehr gute Festigkeitswerte erreicht werden, die nach 1 und 7 Tagen in etwa genauso gut sind wie in dem Referenzbeschleuniger I, der neben Aluminiumsulfat keine weitere Aluminiumverbindung einsetzt, die Abbindeeigenschaften sind gegenüber diesem Referenzbeschleuniger I jedoch deutlich verbessert und die Festigkeitswerte nach 6 Stunden sind ebenfalls besser. Diese Verbesserung kann mit nur geringen Mengen an zusätzlichem Aluminiumhydroxid erreicht werden. Dies ist gegenüber den herkömmlichen Beschleunigern, die sehr viel Aluminiumhydroxid in einer Menge von mehr als 10 Gewichtsprozent einsetzen, überraschend und hat den Vorteil, dass ein sehr ökonomischer Beschleuniger bereitgestellt werden kann, der das von den anorganischen Inhaltsstoffen teure Aluminiumhydroxid nur in deutlich geringeren Mengen benötigt. Die erfindungsgemäßen Beschleuniger haben ferner den weiteren Vorteil, dass keine organischen Verbindungen enthalten sind, die aufgrund ihrer Auswaschbarkeit die Umwelt, insbesondere Wasserorganismen belasten können.

Analog zu den Beispielen E bis H werden die folgenden Beschleuniger P bis T hergestellt:

| Hergestellte Menge: | 1 kg | 1 kg | 1 kg | 1 kg | |
|---|---|---|---|---|---|
| Zusammensetzung: | | % | % | % | % |
| | | | | | |
| Substanz | Gehalt | P | Q | S | T |
| Wasser | 100% | 60,8 | 60,3 | 60,8 | 60,3 |
| Pangel S9 | 100% | 0,5 | 1,0 | | |
| Tixoton® | 100% | | | 0,5 | 1 |
| Aluminiumhydroxid | 100% | 3,1 | 3,1 | 3,1 | 3.1 |
| Aluminiumsulfat | 100% | 35,6 | 35,6 | 35,6 | 35,6 |

Eingesetzt wurden dazu folgende Ausgangsmaterialien:
Wasser
Pangel S9
Tixoton®
Aluminiumhydroxid 76.8 %
Aluminiumsulfat 16 Hydrat 96.4 %

Die Stabilitäten und Viskositätswerte waren wie folgt:

| Beschleuniger | P | Q | S | T |
|---|---|---|---|---|
| Klare überstehende Lösung vor dem Aufrühren (nach 6 Tagen) [%] | 2 | 0 | 6 | 4 |
| | | | | |
| Viskosität nach heftigen Aufrühren (nach 1 Woche) [mPa.s] | 522 | 580 | 682 | 1004 |
| Viskosität 1 Tag später (nach 8 Tagen) [mPa.s] | 742 | 978 | 852 | 1292 |
| Klare überstehende Lösung 1 Monat später (nach 6 Wochen) [%] | 2 | 0 | 14 | 8 |
| | | | | |
| Viskosität nach Aufrühren von Hand (nach 6 Wochen) [mPa.s] | 710 | 908 | 966 | 1302 |

Die Viskositäten wurden mit einem Brookfield DV - II + Viscometer mit Spindel 4 und 100 Umdrehungen pro Minute bei 20 °C gemessen.

Bei Tixoton® handelt es sich um einen auf Bentonit basierenden Stabilisator. Wie aus den Ergebnissen in Bezug auf die Stabilität und den Viskositäten ersichtlich ist, weisen die erfindungsgemäßen Beschleuniger P und Q mit einem anorganischen Stabilisator, der ein Magnesiumsilikat umfasst, gegenüber den Vergleichsbeschleunigem S und T mit einem Stabilisator auf Bentonitbasis bessere Stabilitäten und für die Praxis besser geeignete Viskositäten auf.

## Patentansprüche

1. Beschleuniger für Spritzbeton oder Spritzmörtel, der als wässrige Dispersion vorliegt, die folgendes enthält:
(a) 25 bis 40 Gew.-% Aluminiumsulfat,
(b) mindestens eine weitere Aluminiumverbindung, so dass das molare Verhältnis von Aluminium zu Sulfat in der Dispersion 1,35 bis 0,70 beträgt, und
(c) einen anorganischen Stabilisator, der ein Magnesiumsilikat umfasst.

2. Beschleuniger nach Anspruch 1, **dadurch gekennzeichnet, dass** die wässrige Dispersion den anorganischen Stabilisator in einem Gehalt von 0,1 bis 10 Gew.-%, vorzusgsweise 0,2 bis 3, besonders bevorzugt 0,3 bis 1,3 Gew.-%, enthält.

3. Beschleuniger nach Anspruch 1 oder 2, wobei der anorganische Stabilisator Sepiolith umfasst.

4. Beschleuniger nach einem der Ansprüche 1 bis 3, **dadurch gekennzeichnet, dass** die mindestens eine weitere Aluminiumverbindung in einer Menge von weniger als 10 Gew.-%, vorzugsweise in einer Menge von 2 bis 6 Gew.-%, enthalten ist.

5. Beschleuniger nach einem der Ansprüche 1 bis 4, **dadurch gekennzeichnet, dass** die mindestens eine weitere Aluminiumverbindung zumindest bei einem pH von 1 bis 5, vorzugsweise 2 bis 3,5, wasserlöslich ist.

6. Beschleuniger nach Anspruch 5, **dadurch gekennzeichnet, dass** die mindestens eine weitere Aluminiumverbindung als amorphes Aluminiumhydroxid vorliegt.

7. Beschleuniger nach einem der Ansprüche 1 bis 6, **dadurch gekennzeichnet, dass** die wässrige Dispersion 28 bis 39 Gew.-%, vorzugsweise mehr als 32 Gew.-% und bis zu 37 Gew.-%, Aluminiumsulfat enthält.

8. Beschleuniger nach einem der Ansprüche 1 bis 7, **dadurch gekennzeichnet, dass** das molare Verhältnis von Aluminium zu Sulfat in der Dispersion 1,05 bis 0,70, vorzugsweise 0,94 bis 0,74 beträgt.

9. Beschleuniger nach einem der Ansprüche 1 bis 8, **dadurch gekennzeichnet, dass** die Dispersion in Form einer Suspension vorliegt.

10. Beschleuniger nach einem der Ansprüche 1 bis 9, **dadurch gekennzeichnet, dass** die wässrige Dispersion ein Alkanolamin, insbesondere Diethanolamin und/oder Triethanolamin, vorzugsweise in einer Menge von 2 bis 6 Gew.-%, enthält.

11. Beschleuniger nach einem der Ansprüche 1 bis 10, **dadurch gekennzeichnet, dass** die wässrige Dispersion eine Carbonsäure, insbesondere Ameisensäure, enthält.

12. Verwendung eines Beschleunigers gemäß einem der Ansprüche 1 bis 11 bei der Beschichtung von Substraten, vorzugsweise Tunneloberflächen, Minenoberflächen, Baugruben oder Schächten, mit Spritzbeton oder Spritzmörtel.

13. Ausgehärtete Schicht, welche durch Auftragung von Spritzbeton oder Spritzmörtel erzeugt wurde, dessen Aushärtung mit einem Beschleuniger nach einem der Anspruche 1 bis 11 forciert wurde.

## Claims

1. Accelerator for shot concrete or shot mortar which is present as an aqueous dispersion which contains the following:
(a) 25 to 40 % by weight of aluminium sulfate,
(b) at least one further aluminium compound, so that the molar ratio of aluminium to sulfate in the dispersion is 1.35 to 0.70, and
(c) an inorganic stabilizer, which comprises a magnesium silicate.

2. Accelerator according to claim 1, **characterized in that** the aqueous dispersion contains the inorganic stabilizer with a content of 0.1 to 10 % by weight, preferably 0.2 to 3 % by weight and especially preferred of 0.3 to 1.3 % by weight.

3. Accelerator according to claim 1 or 2, wherein the inorganic stabilizer comprises sepiolithe.

4. Accelerator according to any of claims 1 to 3, **characterized in that** the at least one further aluminium compound is contained in an amount of less than 10 % by weight, preferably in an amount of 2 to 6 % by weight.

5. Accelerator according to claims 1 to 4, **characterized in that** the at least one further aluminium compound is water soluble at least at a pH of 1 to 5, preferably of 2 to 3.5.

6. Accelerator according to claim 5, **characterized in that** the at least one further aluminium compound is amorphous aluminium hydroxide.

7. Accelerator according to any of claims 1 to 6, **characterized in that** the aqueous dispersion contains 28 to 39 % by weight, preferably more than 32 % by weight and up to 37 % by weight of aluminium sulfate.

8. Accelerator according to any of claims 1 to 7, **characterized in that** the molar ratio of aluminium to sulfate in the dispersion is 1.05 to 0.70, preferably 0.94 to 0.74.

9. Accelerator according to any of claims 1 to 8, **characterized in that** the dispersion is present in the form of a suspension.

10. Accelerator according to any of claims 1 to 9, **characterized in that** the aqueous dispersion contains an alkanol amine, especially diethanolamine and/or triethanolamine, preferably in an amount of 2 to 6 % by weight.

11. Accelerator according to any of claims 1 to 10, **characterized in that** the aqueous dispersion contains a carboxylic acid, especially formic acid.

12. Use of an accelerator according to any of claims 1 to 11 for the coating of substrates, preferably tunnel surfaces, mine surfaces, excavation pits or wells with shot concrete or shot mortar.

13. Hardened layer, which has been produced by coating with shot concrete or shot mortar, the hardening thereof is forced with an accelerator according to any of claims 1 to 11.

## Revendications

1. Accélérateur de prise pour béton projeté ou mortier projeté, qui se présente sous la forme d'une dispersion aqueuse, qui contient ce qui suit :
(a) 25 à 40% en masse de sulfate d'aluminium,
(b) au moins un autre composé d'aluminium, de telle sorte que le rapport molaire de l'aluminium au sulfate dans la dispersion vaut 1,35 à 0,70, et
(c) un stabilisant inorganique qui comprend un silicate de magnésium.

2. Accélérateur de prise selon la revendication 1, **caractérisé en ce que** la dispersion aqueuse contient le stabilisant inorganique à une concentration de 0,1 à 10% en masse, de préférence 0,2 à 3, mieux 0,3 à 1,3% en masse.

3. Accélérateur de prise selon la revendication 1 ou 2, dans lequel le stabilisant inorganique contient de la sépiolithe.

4. Accélérateur de prise selon l'une des revendications 1 à 3, **caractérisé en ce que** l'autre composé d'aluminium au moins présent, est présent en quantité inférieure à 10% en masse, de préférence en une quantité de 2 à 6% en masse.

5. Accélérateur de prise selon l'une des revendications 1 à 4, **caractérisé en ce que** l'autre composé d'aluminium au moins présent est soluble dans l'eau au moins à un pH de 1 à 5, de préférence 2 à 3,5.

6. Accélérateur de prise selon la revendication 5, **caractérisé en ce que** l'autre composé d'aluminium au moins présent se présente sous la forme d'hydroxyde d'aluminium amorphe.

7. Accélérateur de prise selon l'une des revendications 1 à 6, **caractérisé en ce que** la dispersion aqueuse contient 28 à 39% en masse, de préférence plus de 32% en masse et jusqu'à 37% en masse de sulfate d'aluminium.

8. Accélérateur de prise selon l'une des revendications 1 à 7, **caractérisé en ce que** le rapport molaire de l'aluminium au sulfate dans la dispersion vaut 1,05 à 0,70, de préférence 0,94 à 0,74.

9. Accélérateur de prise selon l'une des revendications 1 à 8, **caractérisé en ce que** la dispersion se présente sous la forme d'une suspension.

10. Accélérateur de prise selon l'une des revendications 1 à 9, **caractérisé en ce que** la dispersion aqueuse contient une alcanolamine, en particulier de la diéthanolamine et/ou de la triéthanolamine, de préférence en quantité de 2 à 6% en masse.

11. Accélérateur de prise selon l'une des revendications 1 à 10, **caractérisé en ce que** la dispersion aqueuse contient un acide carboxylique, en particulier de l'acide méthanoïque.

12. Utilisation d'un Accélérateur de prise selon l'une des revendications 1 à 11, lors du revêtement de supports, de préférence de surfaces de tunnels, de surface de mines, d'excavations ou de puits, avec du béton projeté ou du mortier projeté.

13. Couche durcie, qui a été produite par application de béton projeté ou de mortier projeté, dont le durcissement a été forcé à l'aide d'un Accélérateur de prise selon l'une des revendications 1 à 11.
